# EUROPEAN PATENT SPECIFICATION

(11) **EP 2 640 069 B1**
(45) Date of publication and mention of the grant of the patent: **31.07.2019**
(21) Application number: 13152455.5
(22) Date of filing: 24.01.2013
(51) Int. Cl.: H04N 5/44, H04B 1/10

(54) **Broadcast receiving apparatus and method for removing interference signal of analog broadcast signal**
Rundfunkempfangsvorrichtung und Verfahren zum Entfernen eines Störsignals aus einem analogen Rundfunksignal
Appareil de réception de diffusion et procédé d'élimination de signal d'interférence de signal de diffusion analogique

(30) Priority: 16.03.2012 KR 20120027074
(43) Date of publication of application: 18.09.2013
(73) Proprietor: Samsung Electronics Co., Ltd., Gyeonggi-do 16677 (KR)
(72) Inventor: Kim, Se-jun, Gyeonggi-do (KR); Kim, Gyo-nyun, Gyeonggi-do (KR); Park, Chan-sub, Incheon (KR)
(74) Representative: Taor, Simon Edward William

(56) References cited:
- US-A1- 2004 257 471
- US-B1- 6 226 049

## Description

Apparatuses and methods consistent with the exemplary embodiments relate to a broadcast receiving apparatus and a method for removing an interference signal of an analog broadcast signal.

A broadcast receiving apparatus e.g., a TV or a set-top box which receives a broadcast signal transmitted by a broadcasting station and processes the broadcast signal to display an image on a screen. The broadcast signal which is received by the broadcast receiving apparatus may be largely classified as an analog broadcast signal and a digital broadcast signal, and an aspect of an exemplary embodiment relates to a broadcast receiving apparatus which receives an analog broadcast signal.

An analog broadcasting system divides several hundred Mhz of frequency into 6 Mhz to 8 Mhz to transmit a broadcast signal of each channel. There are dozens of or even hundreds of broadcasting channels, the number differing depending on the country or territory in which the channels are broadcasted.

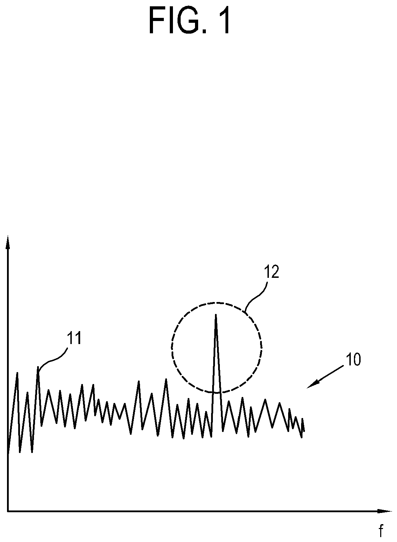

If one desires to receive an analog broadcast signal of a specific channel through the broadcast receiving apparatus in the above channel environment, due to adjacent channels, a broadcast signal 10 including a desired signal 11 of the channel added with an interference signal 12 may be received as shown in FIG. 1.

If such interference signal is received, noise occurs when the signal is processed and displayed on a screen. A conventional broadcast receiving apparatus has no way to correct the noise from the screen which occurs as a result of the interference signal.

US2004257471 discloses a system that detects the presence of an interfering analog television signal in the same channel as a DTV signal. When sync signals of the proper frequency are detected, an analog TV signal rejection filter is inserted in the DTV received signal processing path.

US 6,226,049 discloses a receiver for eliminating interference signals from a high definition signal.

Accordingly, one or more exemplary embodiments there is provided a broadcast receiving apparatus and a method for removing an interference signal component from an analog broadcast signal received to thereby prevent noise from occurring in a screen.

According to an aspect of the present invention, there is provided a broadcast receiving apparatus as set out in claim 1.

According to another aspect of the present invention, there is provided a method for removing an interference signal according to claim 9.

The above and/or other aspects will become apparent and more readily appreciated from the following description of the exemplary embodiments, taken in conjunction with the accompanying drawings, in which:
FIG. 1 illustrates an interference signal component which is included in a broadcast signal;
FIG. 2 is a control block diagram of a broadcast receiving apparatus according to an exemplary embodiment;
FIG. 3 illustrates a detection of a sync signal area of a broadcast signal;
FIGS. 4A to 4C illustrate exemplary embodiments for removing an interference signal; and
FIGS. 5 and 6 are flowcharts showing a method for removing an interference signal from an analog broadcast signal according to an exemplary embodiment.

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

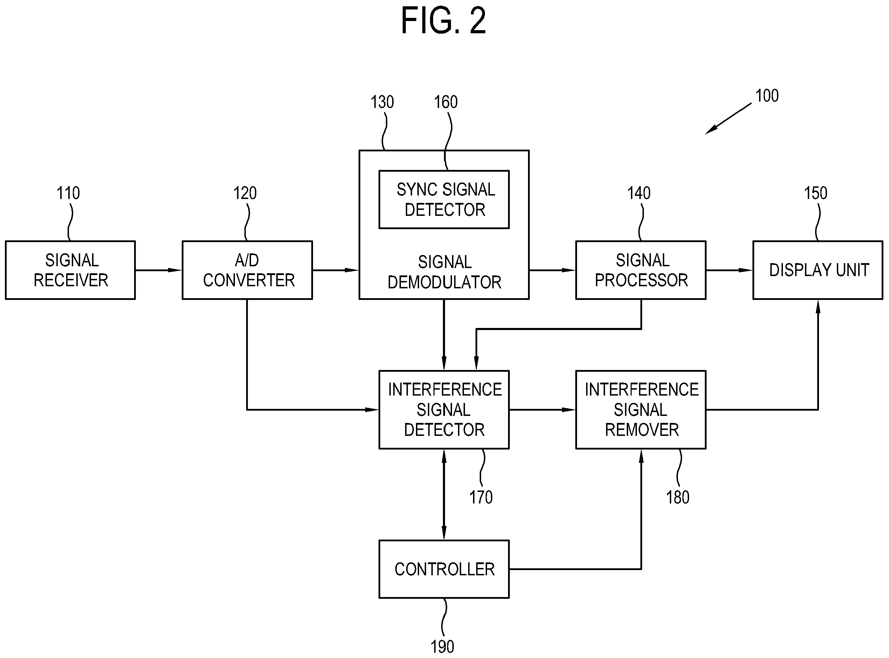

FIG. 2 is a control block diagram of a broadcast receiving apparatus 100 according to an exemplary embodiment.

As shown therein, the broadcast receiving apparatus 100 includes a signal receiver 110, a sync signal detector 160, an interference signal detector 170, and an interference signal remover 180. The broadcast receiving apparatus 100 may further include an analog/digital (A/D) converter 120, a signal demodulator 130, a signal processor 140, a display unit 150 and a controller 190. The broadcast receiving apparatus 100 may include a TV or a set-top box but not limited thereto.

The signal receiver 110 receives an analog broadcast signal in a radio frequency (RF) band. Broadcast signals of each channel are classified by a predetermined frequency band. The signal receiver 110 receives a broadcast signal of a channel selected by a user, and the received broadcast signal is converted into and output as an intermediate frequency (IF) signal.

An image which is displayed in a screen includes a plurality of frames, and each frame includes a plurality of scanning lines. An analog broadcast signal includes image status of each scanning line forming a frame, i.e. brightness and color information. A horizontal sync signal which notifies the beginning of information of a scanning line and a vertical sync signal which notifies the end of information of a last scanning line of a single frame are included in a broadcast signal for transmission.

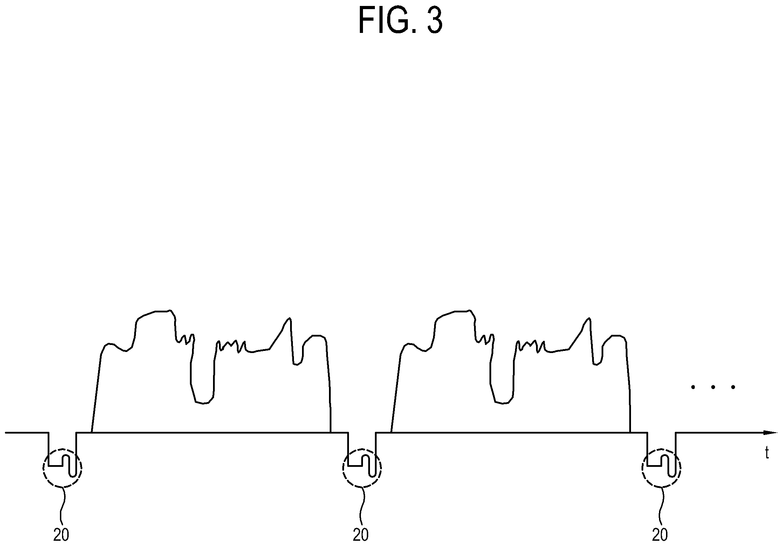

The sync signal detector 160 detects a sync signal, i.e., a vertical sync signal and a horizontal sync signal of a received broadcast signal. As shown in FIG. 3, separating a carrier wave from a received broadcast signal and demodulating the broadcast signal generates a signal in a certain format including a sync signal area 20 and a data signal area. As the vertical sync signal and the horizontal sync signal have a certain signal level according to predetermined standards, the sync signal detector 160 may detect the area falling under the signal level of the vertical sync signal and horizontal sync signal by various known methods.

The interference signal detector 170 compares the sync signal area 20 with a predetermined reference signal and detects the interference signal component from the sync signal. The analog broadcast signal may include an interference signal component due to an effect of adjacent channels, and such interference signal component has a certain pattern as a result of interference by the adjacent channels, and may appear from a sync signal, too. For example, if a broadcast signal includes an interference signal component in an impulse format due to an effect of adjacent channels in a certain frequency band, an interference signal in a sine waveform may be present in a horizontal sync signal and a vertical sync signal in a time domain in case the broadcast signal is demodulated as it is.

The interference signal remover 180 removes an interference signal component from the entire broadcast signal based on the interference signal detected by the interference signal detector 170. As described above, the interference signal component has a certain pattern and thus may be removed on the basis of the interference signal component detected from the sync signal area. Only principal elements of the broadcast receiving apparatus 100 a have been described. Hereinafter, the overall configuration of the broadcast receiving apparatus 100 including exemplary embodiments will be described.

An analog broadcast signal which is received through the signal receiver 110 is converted into an IF signal and output to the A/D converter 120. The A/D converter 120 converts a received broadcast signal into a digital signal through sampling, quantizing and coding processes, and the converted digital signal is output to the signal demodulator 130.

The signal demodulator 130 includes a demodulator and may perform a demodulation process to separate a carrier wave from a broadcast signal, and perform an automatic gain control to make a level of an output signal uniform. The signal demodulator 130 may detect a sync signal area of a demodulated broadcast signal. That is, the signal demodulator 130 may include the sync signal detector 160, which means that the signal demodulator 130 may perform the function of the sync signal detector 160. This does not need to be interpreted that there should be a sync signal detector 160 in the signal demodulator 130.

The signal processor 140 processes a broadcast signal output by the signal demodulator 130, according to a predetermined image processing operation. The image processing operation of the signal processor 140 may include a decoding operation corresponding to an image format of an image signal, a scaling operation to adjust an image signal into a preset resolution, a noise reduction operation to improve an image quality, a detail enhancement operation, and a frame refresh rate conversion operation, but not limited thereto. The signal processor 140 may be realized as at least one circuit board including various chipsets and memories to perform the aforementioned image processing operations.

The broadcast signal which is processed by the signal processor 140 is ultimately displayed on the display unit 150 of the broadcast receiving apparatus 100 or a connected external display apparatus (not shown). The display unit 150 may include a display panel (not shown) such as liquid crystal display (LCD) and plasma display panel (PDP), and a panel driver (not shown) to drive the display panel to display thereon an image, but not limited thereto.

As described above, the interference signal detector 170 may compare a sync signal area of a broadcast signal with a predetermined reference signal and detect the interference signal component, in which case it may detect the interference signal component from a signal output by at least one of the A/D converter 120, the signal demodulator 130 and the signal processor 140. As an analog broadcast signal is converted into a digital signal through the A/D converter 120, a reference signal may also include a digital signal corresponding to a vertical sync signal or a horizontal sync signal.

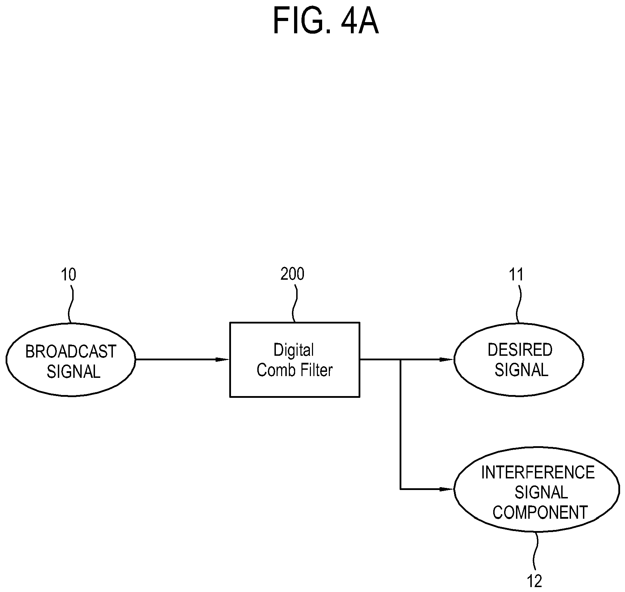

If the interference signal component is detected by the interference signal detector 170, the interference signal remover 180 removes the interference signal component according to the pattern of such interference signal. The interference signal remover 180 may remove the interference signal through various methods, such as a method of using a digital comb filter or a channel equalizer, a method of utilizing a fast fourier transform and a method of processing software through a microprocessor.
[1] FIG. 4A illustrates a digital comb filter 200 implemented as the interference signal remover 180.

According to the present exemplary embodiment, the interference signal remover 180 may include the digital comb filter 200. A desired signal 11 and the interference signal component 12 may be separated from an input broadcast signal 10 by adjusting a filter coefficient of the digital comb filter 200. According to analysis of the interference signal in a frequency domain, energy is distributed in a horizontal frequency period according to each image standard (e.g., 15.734 khz in the case of NTSC). If energy in a horizontal frequency period is removed, the interference signal component may be removed from the input broadcast signal by adjusting a filter coefficient of the digital comb filter 200.

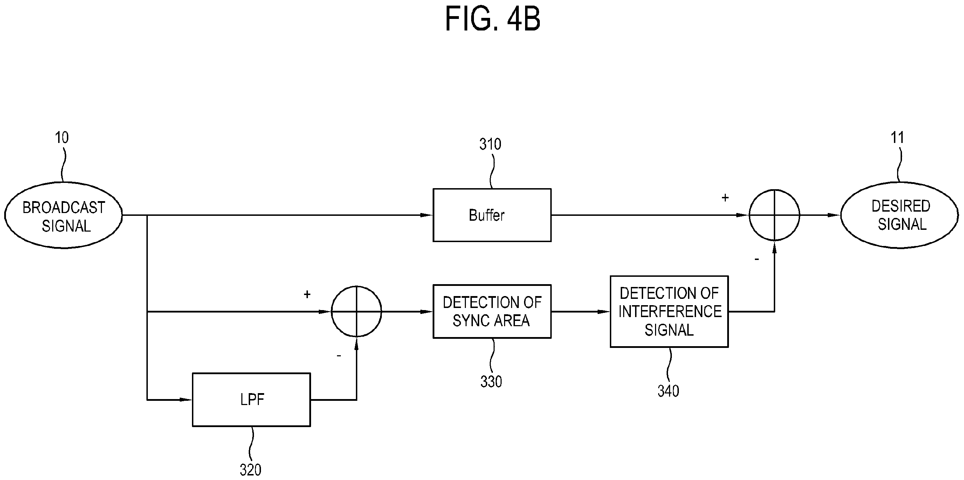

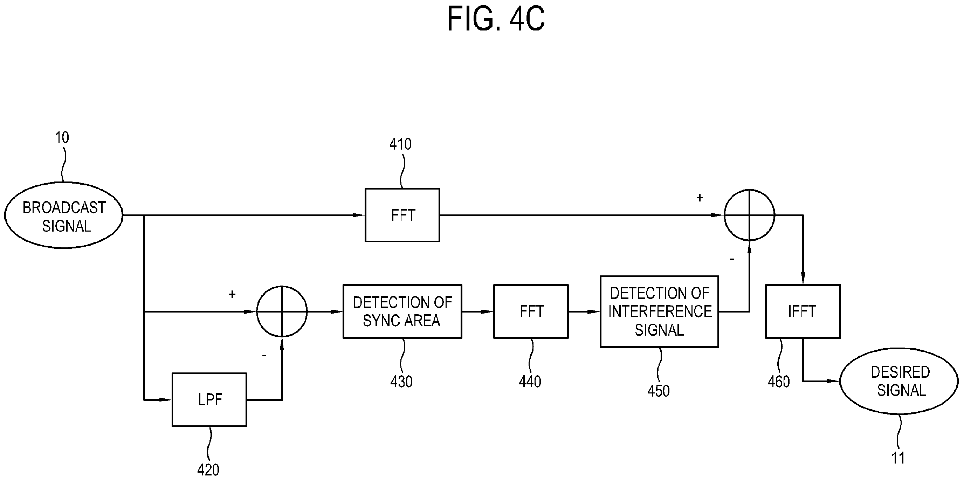

FIG. 4 illustrates a channel equalizer implemented as the interference signal remover 180.

As shown therein, an input broadcast signal is input to a line of a buffer 310, a line of a sync area detection 330 and to an interference signal detection 340, and the signal of the interference signal detection 340 is removed from the signal output by the buffer 310 to thereby output only the desired signal 11 from the input broadcast signal 10.

A configuration for detecting the sync signal, i.e., the horizontal sync signal and the vertical sync signal is the same as that described above, and noise may be removed from the signal by inserting a low pass filter (LPF) 320 prior to the detection of the sync signal.

A configuration for comparing the sync signal with the predetermined reference signal and detecting the interference signal component is the same as that described above.

The desired signal may be output by the buffer 310 by removing the detected interference signal component, in which case the interference signal remover 180 may include a channel equalizer. Based on the interference signal detected by the interference signal detector 170, the channel equalizer may renew the filter coefficient and adjust the gain of the input broadcast signal through the renewed filter coefficient to thereby equalize the broadcast signal.

FIG. 4C illustrates an example of removing an interference signal component in a frequency domain by using a fast fourier transform (FFT).

According to the present exemplary embodiment, if the sync signal area is detected from the received broadcast signal (430), the interference signal detector 170 converts the broadcast signal into a frequency domain by performing the FFT (410), and may compare the frequency domain information with the predetermined reference signal and detect the interference signal component.

The interference signal remover 180 may remove the interference signal component detected by the interference signal detector 170 from the frequency domain, and output a signal in a time domain through an inverse fast fourier transform (460).

The broadcast receiving apparatus 100 may further include a controller 190 to control the interference signal detector 170 and the interference signal remover 180. The controller 190 may include a microprocessor such as a micom. The broadcast receiving apparatus 100 may perform the detection and removal of the interference signal by performing a software function through the controller 190. The interference signal information which is detected by the interference signal detector 170 may be transmitted to the controller 190 through an inter-integrated circuit (I2C), and the controller 190 may control the interference signal remover 180 to remove the interference signal from the broadcast signal through a predetermined algorithm.

According to the broadcast receiving apparatus 100 which has been described above, the interference signal which is included in the received analog broadcast signal due to the effect of adjacent channels may be removed through a digital device.

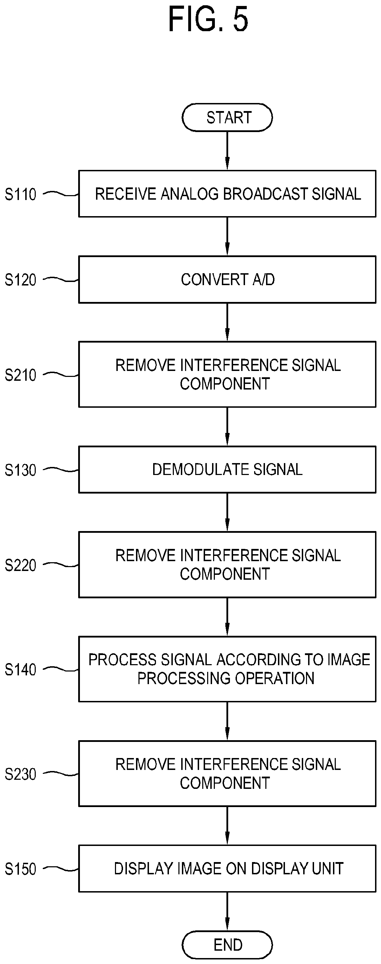

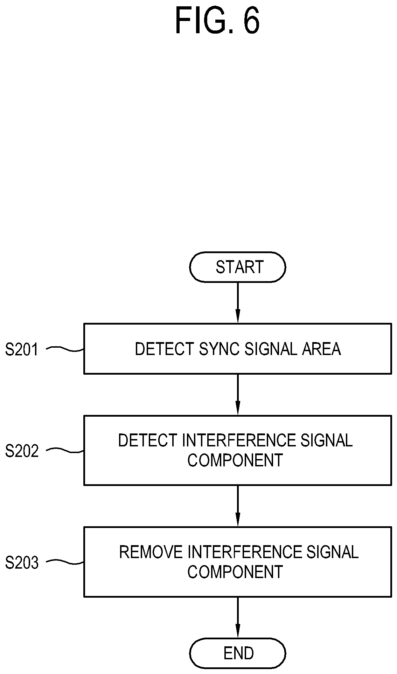

FIGS. 5 and 6 are flowcharts showing a method for removing the interference signal from the analog broadcast signal according to an exemplary embodiment.

The described aspects may be embodied through a broadcast receiving apparatus such as a TV or a set-top box which may receive an analog broadcast signal. The broadcast receiving apparatus receives an analog broadcast signal in an RF band (S110), and converts the received broadcast signal into a digital signal (S120).

The broadcast signal which is converted into the digital signal is demodulated by the demodulator (S130). The demodulated broadcast signal is processed according to a predetermined image processing operation (S140), and displayed in the broadcast receiving apparatus or a display unit of a connected display apparatus (S150).

The received analog broadcast signal may include the interference signal due to the effect of adjacent channels. The exemplary embodiments include operations (S210, S220 and S230) to remove the interference signal component from the broadcast signal, which may be performed following at least one of the A/D conversion operation (S120), the signal demodulation operation (S130) and the image processing operation (S140). That is, only one of the operations (S210, S220 and S230) for removing the interference signal component shown in FIG. 5 may be performed.

The operations (S210, S220 and S230) for removing the interference signal component are performed as illustrated in FIG. 6.

First, the sync signal area, i.e., the vertical sync signal and the horizontal sync signal of the broadcast signal is detected (S201). As the vertical sync signal and the horizontal sync signal have a certain signal level according to a predetermined standard, the area falling under the signal level of the vertical sync signal and horizontal sync signal may be detected by various known methods.

The detected sync signal area is compared with the predetermined reference signal to detect the interference signal (S202). In this case, the interference signal may be detected from the signal which is output from at least one of the operation of converting the analog signal into a digital signal (S210), the operation of demodulating the signal (S220) and the operation of processing the signal according to the image processing operation (S230).

The detected interference signal component is removed according to its pattern by various exemplary embodiments (S203). The interference signal component may be removed (i) by adjusting the filter coefficient through the digital comb filter and separating the interference signal component from the broadcast signal, (ii) by adjusting a gain of the broadcast signal through the channel equalizer and (iii) by detecting the interference signal component from the frequency domain, as described above with reference to FIGS. 4A, 4B and 4C. However, it is noted that removing of the detected interference signal component is not limited to the methods discussed above, but other methods for removing interference may be utilized.

As described above, the interference signal component which is included in the received analog broadcast signal due to the effect of adjacent channels may be removed.

As described above, a broadcast receiving apparatus and a method for removing the interference signal of the analog broadcast signal may remove the interference signal component from the received analog broadcast signal through a digital device.

Although a few exemplary embodiments have been shown and described, it will be appreciated by those skilled in the art that changes may be made in these exemplary embodiments without departing from the principles of the inventive concept, the range of which is defined in the appended claims.

## Claims

1. A broadcast receiving apparatus comprising:
a signal receiver (110) arranged to receive an analog broadcast signal corresponding to a channel selected by a user from among a plurality of channels in a radio frequency, RF, band;
a sync signal detector (160) arranged to detect a sync signal area of the received analog broadcast signal;
an interference signal detector (170) arranged to compare the detected sync signal area of the received analog broadcast signal with a predetermined reference signal to identify an interference signal component from the detected sync signal area, the interference signal component corresponding to a frequency of a channel adjacent to the selected channel among the plurality of channels;
an interference signal remover (180) arranged to remove the interference signal component from the received analog broadcast signal.

2. The broadcast receiving apparatus according to claim 1, further comprising an analog/digital, A/D, converter (120) arranged to convert the received analog broadcast signal received by the signal receiver, into a digital signal and to output the converted broadcast signal to the sync signal detector.

3. The broadcast receiving apparatus according to claim 2, further comprising a signal demodulator (130) which demodulates the converted broadcast signal output by the A/D converter, wherein the signal demodulator comprises the sync signal detector.

4. The broadcast receiving apparatus according to claim 3, further comprising a signal processor (140) arranged to process the demodulated signal output by the signal demodulator, according to a predetermined image processing operation.

5. The broadcast receiving apparatus according to claim 4, wherein the interference signal detector is arranged to detect the interference signal component of a signal which is output by at least one of the A/D converter, the signal demodulator and the signal processor.

6. The broadcast receiving apparatus according to any one of claims 1 to 5, wherein the interference signal remover comprises a digital comb filter, and is arranged to adjust a filter coefficient of the digital comb filter and separates the interference signal component from the received analog broadcast signal.

7. The broadcast receiving apparatus according to any one of claims 1 to 6, wherein the interference signal remover comprises a channel equalizer, and is arranged to adjust a filter coefficient of the channel equalizer and adjusts a gain of the received analog broadcast signal to remove the interference signal component.

8. The broadcast receiving apparatus according to any one of claims 1 to 7, wherein the interference signal detector is arranged to convert the received analog broadcast signal into a frequency domain through fast fourier transform (FFT), and to compare frequency domain information of the frequency domain with the predetermined reference signal to detect the interference signal component, and the interference signal remover is arranged to remove the interference signal component from the frequency domain and to output a signal in a time domain through an inverse fast fourier transform.

9. A method for removing an interference signal of an analog broadcast signal, the method comprising:
receiving the analog broadcast signal corresponding to a channel selected by a user from among a plurality of channels;
detecting a sync signal area of the received analog broadcast signal;
comparing the detected sync signal area of the analog broadcast signal with a predetermined reference signal to identify an interference signal component from the detected sync signal area, the interference signal component corresponding to a frequency of a channel adjacent to the selected channel among the plurality of channels;
removing the interference signal component from the received analog broadcast signal.

10. The method according to claim 9, further comprising converting the analog broadcast signal into a digital signal;
demodulating the digital signal; and
processing the demodulated signal according to a predetermined image processing operation.

11. The method according to claim 10, further comprising detecting the interference signal component of a signal which is output from at least one of the converting the analog signal into a digital signal, demodulating the digital signal and processing the demodulated signal according to the predetermined image processing operation.

12. The method according to any one of claims 9 to 11, wherein the removing the interference signal component comprises adjusting a filter coefficient of a digital comb filter and separating the interference signal component from the analog broadcast signal through the digital comb filter.

13. The method according to any one of claims 9 to 12, wherein the removing the interference signal component comprises adjusting a filter coefficient of a channel equalizer and adjusting a gain of the broadcast signal through the channel equalizer to remove the interference signal component.

## Patentansprüche

1. Rundfunkempfangsvorrichtung, die Folgendes umfasst:
einen Signalempfänger (110), ausgelegt zum Empfangen eines analogen Rundfunksignals entsprechend einem von einem Benutzer aus mehreren Kanälen in einem Radiofrequenz-(RF)-Band ausgewählten Kanal;
einen Sync-Signaldetektor (160), ausgelegt zum Erkennen eines Sync-Signalbereichs des empfangenen analogen Rundfunksignals;
einen Störsignaldetektor (170), ausgelegt zum Vergleichen des erkannten Sync-Signalbereichs des empfangenen analogen Rundfunksignals mit einem vorbestimmten Referenzsignal zum Identifizieren einer Störsignalkomponente von dem erkannten Sync-Signalbereich, wobei die Störsignalkomponente einer Frequenz eines Kanals neben dem gewählten Kanal aus den mehreren Kanälen entspricht;
einen Störsignalentferner (180), ausgelegt zum Entfernen der Störsignalkomponente aus dem empfangenen analogen Rundfunksignal.

2. Rundfunkempfangsvorrichtung nach Anspruch 1, die ferner einen Analog-Digital-(A/D)-Wandler (120) umfasst, ausgelegt zum Umwandeln des vom Signalempfänger empfangenen analogen Rundfunksignals in ein digitales Signal und zum Ausgeben des umgewandelten Rundfunksignals an den Sync-Signaldetektor.

3. Rundfunkempfangsvorrichtung nach Anspruch 2, die ferner einen Signaldemodulator (130) umfasst, der das vom A/D-Wandler ausgegebene umgewandelte Rundfunksignal demoduliert, wobei der Signaldemodulator den Sync-Signaldetektor umfasst.

4. Rundfunkempfangsvorrichtung nach Anspruch 3, die ferner einen Signalprozessor (140) umfasst, ausgelegt zum Verarbeiten des vom Signaldemodulator ausgegebenen demodulierten Signals gemäß einem vorbestimmten Bildverarbeitungsvorgang.

5. Rundfunkempfangsvorrichtung nach Anspruch 4, wobei der Störsignaldetektor zum Erkennen der Störsignalkomponente eines Signals ausgelegt ist, das von wenigstens einem aus A/D-Wandler, Signaldemodulator und Signalprozessor ausgegeben wird.

6. Rundfunkempfangsvorrichtung nach einem der Ansprüche 1 bis 5, wobei der Störsignalentferner ein digitales Kammfilter umfasst und zum Justieren eines Filterkoeffizienten des digitalen Kammfilters und zum Trennen der Störsignalkomponente von dem empfangenen analogen Rundfunksignal ausgelegt ist.

7. Rundfunkempfangsvorrichtung nach einem der Ansprüche 1 bis 6, wobei der Störsignalentferner einen Kanal-Equalizer umfasst und zum Justieren eines Filterkoeffizienten des Kanal-Equalizers und zum Justieren einer Verstärkung des empfangenen analogen Rundfunksignals ausgelegt ist, um die Störsignalkomponente zu entfernen.

8. Rundfunkempfangsvorrichtung nach einem der Ansprüche 1 bis 7, wobei der Störsignaldetektor zum Umwandeln des empfangenen analogen Rundfunksignals in eine Frequenzdomäne durch schnelle Fourier-Transformation (FFT) und zum Vergleichen von Frequenzdomäneninformationen der Frequenzdomäne mit dem vorbestimmten Referenzsignal ausgelegt ist, um die Störsignalkomponente zu erkennen, und der Störsignalentferner zum Entfernen der Störsignalkomponente aus der Frequenzdomäne und zum Ausgeben eines Signals in einer Zeitdomäne durch eine umgekehrte schnelle Fourier-Transformation ausgelegt ist.

9. Verfahren zum Entfernen eines Störsignals eines analogen Rundfunksignals, wobei das Verfahren Folgendes beinhaltet:
Empfangen des analogen Rundfunksignals entsprechend einem von einem Benutzer aus mehreren Kanälen ausgewählten Kanal;
Erkennen eines Sync-Signalbereichs des empfangenen analogen Rundfunksignals;
Vergleichen des erkannten Sync-Signalbereichs des analogen Rundfunksignals mit einem vorbestimmten Referenzsignal zum Identifizieren einer Störsignalkomponente aus dem erkannten Sync-Signalbereich, wobei die Störsignalkomponente einer Frequenz eines Kanals neben dem gewählten Kanal aus den mehreren Kanälen entspricht;
Entfernen der Störsignalkomponente aus dem empfangenen analogen Rundfunksignal.

10. Verfahren nach Anspruch 9, das ferner das Umwandeln des analogen Rundfunksignals in ein digitales Signal beinhaltet;
Demodulieren des digitalen Signals; und
Verarbeiten des demodulierten Signals gemäß einem vorbestimmten Bildverarbeitungsvorgang.

11. Verfahren nach Anspruch 10, das ferner das Erkennen der Störsignalkomponente eines Signals beinhaltet, das von wenigstens einem aus Umwandeln des analogen Signals in ein digitales Signal, Demodulieren des digitalen Signals und Verarbeiten des demodulierten Signals gemäß dem vorbestimmten Bildverarbeitungsvorgang ausgegeben wird.

12. Verfahren nach einem der Ansprüche 9 bis 11, wobei das Entfernen der Störsignalkomponente das Justieren eines Filterkoeffizienten eines digitalen Kammfilters und das Trennen der Störsignalkomponente von dem analogen Rundfunksignal durch das digitale Kammfilter beinhaltet.

13. Verfahren nach einem der Ansprüche 9 bis 12, wobei das Entfernen der Störsignalkomponente das Justieren eines Filterkoeffizienten eines Kanal-Equalizers und das Justieren einer Verstärkung des Rundfunksignals durch den Kanal-Equalizer beinhaltet, um die Störsignalkomponente zu entfernen.

## Revendications

1. Appareil de réception de diffusion comportant :
un récepteur de signal (110) agencé pour recevoir un signal de diffusion analogique correspondant à un canal sélectionné par un utilisateur parmi une pluralité de canaux dans une bande RF (radio frequency band - bande de fréquences radioélectriques) ;
un détecteur de signal de synchronisation (160) agencé pour détecter une zone de signal de synchronisation du signal de diffusion analogique reçu ;
un détecteur de signal d'interférence (170) agencé pour comparer la zone de signal de synchronisation détectée du signal de diffusion analogique reçu par rapport à un signal de référence prédéterminé à des fins d'identification d'un élément de signal d'interférence en provenance de la zone de signal de synchronisation détectée, l'élément de signal d'interférence correspondant à une fréquence d'un canal adjacent au canal sélectionné parmi la pluralité de canaux ;
un dispositif d'élimination de signal d'interférence (180) agencé pour éliminer l'élément de signal d'interférence en provenance du signal de diffusion analogique reçu.

2. Appareil de réception de diffusion selon la revendication 1, comportant par ailleurs un convertisseur analogique-numérique, CAN, (120) agencé pour convertir le signal de diffusion analogique reçu qui a été reçu par le récepteur de signal, en un signal numérique et pour émettre en sortie le signal de diffusion converti à destination du détecteur de signal de synchronisation.

3. Appareil de réception de diffusion selon la revendication 2, comportant par ailleurs un démodulateur de signal (130) qui démodule le signal de diffusion converti émis en sortie par le CAN, dans lequel le démodulateur de signal comporte le détecteur de signal de synchronisation.

4. Appareil de réception de diffusion selon la revendication 3, comportant par ailleurs un processeur de signal (140) agencé pour traiter le signal démodulé émis en sortie par le démodulateur de signal, selon une opération de traitement d'image prédéterminée.

5. Appareil de réception de diffusion selon la revendication 4, dans lequel le détecteur de signal d'interférence est agencé pour détecter l'élément de signal d'interférence d'un signal qui est émis en sortie par au moins l'un parmi le CAN, le démodulateur de signal et le processeur de signal.

6. Appareil de réception de diffusion selon l'une quelconque des revendications 1 à 5, dans lequel le dispositif d'élimination de signal d'interférence comporte un filtre en peigne numérique, et est agencé pour ajuster un coefficient de filtre du filtre en peigne numérique et sépare l'élément de signal d'interférence en provenance du signal de diffusion analogique reçu.

7. Appareil de réception de diffusion selon l'une quelconque des revendications 1 à 6, dans lequel le dispositif d'élimination de signal d'interférence comporte un égaliseur de canal, et est agencé pour ajuster un coefficient de filtre de l'égaliseur de canal et ajuste un gain du signal de diffusion analogique reçu pour éliminer l'élément de signal d'interférence.

8. Appareil de réception de diffusion selon l'une quelconque des revendications 1 à 7, dans lequel le détecteur de signal d'interférence est agencé pour convertir le signal de diffusion analogique reçu en un domaine fréquentiel par l'intermédiaire d'une transformation de Fourier rapide (TFR), et pour comparer les informations de domaine fréquentiel du domaine fréquentiel par rapport au signal de référence prédéterminé pour détecter l'élément de signal d'interférence, et le dispositif d'élimination de signal d'interférence est agencé pour éliminer l'élément de signal d'interférence en provenance du domaine fréquentiel et pour émettre en sortie un signal dans un domaine temporel par l'intermédiaire d'une transformation de Fourier rapide inverse.

9. Procédé d'élimination d'un signal d'interférence d'un signal de diffusion analogique, le procédé comportant les étapes consistant à :
recevoir le signal de diffusion analogique correspondant à un canal sélectionné par un utilisateur parmi une pluralité de canaux ;
détecter une zone de signal de synchronisation du signal de diffusion analogique reçu ;
comparer la zone de signal de synchronisation détectée du signal de diffusion analogique par rapport à un signal de référence prédéterminé à des fins d'identification d'un élément de signal d'interférence en provenance de la zone de signal de synchronisation détectée, l'élément de signal d'interférence correspondant à une fréquence d'un canal adjacent au canal sélectionné parmi la pluralité de canaux ;
éliminer l'élément de signal d'interférence en provenance du signal de diffusion analogique reçu.

10. Procédé selon la revendication 9, comportant par ailleurs les étapes consistant à convertir le signal de diffusion analogique en un signal numérique ;
démoduler le signal numérique ; et
traiter le signal démodulé selon une opération de traitement d'image prédéterminée.

11. Procédé selon la revendication 10, comportant par ailleurs l'étape consistant à détecter l'élément de signal d'interférence d'un signal qui est émis en sortie à partir d'au moins l'une des étapes consistant à convertir le signal analogique en un signal numérique, démoduler le signal numérique et traiter le signal démodulé selon l'opération de traitement d'image prédéterminée.

12. Procédé selon l'une quelconque des revendications 9 à 11, dans lequel l'étape consistant à éliminer l'élément de signal d'interférence comporte les étapes consistant à ajuster un coefficient de filtre d'un filtre en peigne numérique et à séparer l'élément de signal d'interférence en provenance du signal de diffusion analogique par l'intermédiaire du filtre en peigne numérique.

13. Procédé selon l'une quelconque des revendications 9 à 12, dans lequel l'étape consistant à éliminer l'élément de signal d'interférence comporte les étapes consistant à ajuster un coefficient de filtre d'un égaliseur de canal et à ajuster un gain du signal de diffusion par l'intermédiaire de l'égaliseur de canal pour éliminer l'élément de signal d'interférence.
